# FASCICULE DE BREVET EUROPEEN

(11) **EP 1 710 475 B1**
(45) Date de publication et mention de la délivrance du brevet: **23.03.2011**
(21) Numéro de dépôt: 06300313.1
(22) Date de dépôt: 31.03.2006
(51) Int. Cl.: F16H 61/24

(54) **Dispositif de commande pour boîte de vitesses manuelle**
Schalteinrichtung zur Betätigung eines manuellen Schaltgetriebes
Gear shift device for control of a manual gearbox

(30) Priorité: 06.04.2005 FR 0503407
(43) Date de publication de la demande: 11.10.2006
(73) Titulaire: Peugeot Citroën Automobiles SA, 78140 Vélizy-Villacoublay (FR)
(72) Inventeur: Ploe, Pierre, 92800 Puteaux (FR)

(56) Documents cités:
- EP-A- 1 557 592
- FR-A- 2 803 252
- FR-A- 2 833 540

## Description

L'invention concerne la commande interne des boîtes de vitesses manuelles et le confort des passages de vitesses utilisant un système à base de masse inertielle.

Elle concerne plus particulièrement un système d'entraînement en rotation de la masse inertielle selon un mode de passage de vitesses par rotation du levier de passage avec un découplage de la masse en mode de sélection de vitesses lors de la translation du levier de passage.

Le rôle de la masse inertielle est d'augmenter significativement l'inertie globale de la commande de passage, de manière à adoucir l'effet du passage des vitesses au niveau du levier de vitesses et donc d'augmenter le confort de passage de vitesses pour le conducteur.

### ARRIERE-PLAN DE L'INVENTION

Généralement, la masse inertielle est fixée directement sur le levier de passage de vitesses. Cette implémentation est économique mais nécessite l'emploi d'une masse importante de l'ordre du kilogramme pour atteindre une inertie suffisante de l'ordre de 7000 kg.mm².

Par contre, dans le cas d'un levier pivotant pour le mode passage des vitesses et translatant pour le mode sélection des vitesses, la masse inertielle intervient aussi dans le mode sélection, ce qui est défavorable pour le fonctionnement recherché dans ce mode.

Afin de pallier ce problème, il est connu d'utiliser des systèmes qui permettent de découpler la masse inertielle en fonction du mode utilisé. Ces systèmes sont dits à masse "découplée". (voir par exemple le document FR 2 833 540, un système conforme au préambule de la REV.1)

Dans ce type de système, une masselotte fixe est portée au bout d'un bras rotatif dont l'axe est directement fixé en rotation sur le carter de la boîte de vitesses. Cette masselotte est déplacée en rotation par le déplacement en rotation du levier de passage des vitesses par l'intermédiaire d'une branche démultiplications, ce type de système nécessite l'emploi d'une masselotte de masse importante et relativement encombrante.

On connaît également notamment du document FR 2 803 252, un système d'entraînement par crémaillère d'une masse pivotante située à l'extérieur d'une boîte de vitesses et proposant un déplacement en sélection du levier par rotation via un engrènement d'un secteur denté sur un pignon. Cette architecture permet également un découplage du déplacement axial du levier mais nécessite une attention particulière dans la réalisation du pignon qui ne doit pas s'user localement face aux couloirs de passage de vitesses et entraîner des accrocs de sélection dus à une usure discontinue sur la longueur du pignon. De plus, le parallélisme à obtenir entre l'axe de translation de la crémaillère et l'axe du pignon doit être particulièrement précis pour ne pas engendrer des prises de jeu ou des coincements discontinus en sélection.

On connaît également le document EP-A1 557 592, document relevant de l'article 54(3) CBE.

### OBJET DE L'INVENTION

L'invention a pour objet un système d'entraînement d'une masse inertielle par rotation du levier de passage de vitesses, résistant à l'usure et permettant une démultiplication évolutive.

Selon l'invention, la masse inertielle et son système d'entraînement sont disposés à l'extérieur du carter de la boîte de vitesses. La masse inertielle est contenue dans un boîtier indépendant du carter et facilement interchangeable, directement fixé sur le carter.

Outre le but d'augmenter le confort des passages de vitesses sur un véhicule équipé d'une boîte de vitesses manuelle, confort ressenti par le conducteur, le système selon l'invention a notamment pour avantage d'augmenter le rendement énergétique par rapport à une solution du type décrit précédemment. L'énergie inertielle restituée par la masse au levier de passage de vitesses bénéficie ainsi d'une démultiplication plus favorable.

### BREVE DESCRIPTION DE L'INVENTION

L'invention a pour premier objet, un système d'entraînement selon la revendication 1.

Le levier d'entraînement comporte en outre à sa deuxième extrémité, une crémaillère montée pivotante autour d'un axe de pivot. La crémaillère comporte un secteur denté engrenant avec un pignon coaxial à l'arbre et solidaire de la masse et qui est adjacent à une face radiale la masse.

Selon une autre caractéristique avantageuse, l'entraxe axe arbre de commande / axe tige d'entraînement est variable entre deux positions extrêmes imposées par le débattement du levier de passage définissant ainsi une démultiplication évolutive.

L'invention a pour deuxième objet, un système inertiel destiné à être couplé à un levier de passage de vitesses d'une boîte de vitesses manuelle et entraîné par un système d'entraînement tel que défini précédemment.

Il est caractérisé en ce que la masse inertielle et la crémaillère sont disposés et supportés à l'intérieur d'un boîtier et en ce que le levier d'entraînement est disposé et supporté sur le boîtier.

Selon une caractéristique, le boîtier est de forme générale cylindrique creuse.

Selon une autre caractéristique, le boîtier comporte des premiers perçages pour recevoir et maintenir en rotation les extrémités de l'arbre de la masse inertielle. Les premiers perçages sont ménagés à proximité du centre du boîtier et sur un axe médian du boîtier.

Le boîtier comporte en outre des deuxièmes perçages ménagés à proximité de l'extérieur du boîtier, sur le même axe médian et dans une direction diamétralement opposée par rapport aux premiers perçages, pour recevoir et supporter en rotation le pivot du levier d'entraînement.

Selon une caractéristique, le pivot supporte la crémaillère à l'intérieur du boîtier, les bras du levier, supportés par les extrémités libres du pivot, sont disposés à l'extérieur du boîtier, les extrémités libres des bras supportant la tige d'entraînement.

Selon une autre caractéristique avantageuse, le boîtier comporte au moins deux pattes de fixation permettant chacune la fixation du boîtier sur chaque plan d'une partie du carter formant un dièdre.

Enfin selon une dernière caractéristique, les pattes de fixation viennent de matière avec le boîtier.

### BREVE DESCRIPTION DES DESSINS

D'autres caractéristiques et avantages de la présente invention apparaîtront plus clairement à la lecture de la description suivante d'un mode de réalisation particulier non limitatif de celle-ci, en se rapportant aux dessins annexés, sur lesquels :
- la figure 1 illustre une vue de dessus, en perspective d'un système d'entraînement selon l'invention monté sur le carter d'une boîte de vitesses ;
- la figure 2 illustre une vue du système d'entraînement de la figure 1 suivant l'angle de vue O ;
- la figure 3 illustre une vue de dessus, couvercle ouvert, du boîtier supportant le système inertiel du système d'entraînement selon l'invention ;
- la figure 4 illustre une vue en coupe du boîtier de la figure 3 selon l'axe de coupe IV-IV.
- la figure 5 illustre une vue éclatée du système inertiel selon l'invention et de son boîtier ; et
- la figure 6 illustre une vue de dessus du système d'entraînement selon l'invention mettant en évidence le principe de démultiplication évolutive.

Sur ces figures, les mêmes éléments sont désignés par les mêmes repères.

### DESCRIPTION DETAILLEE DE L'INVENTION

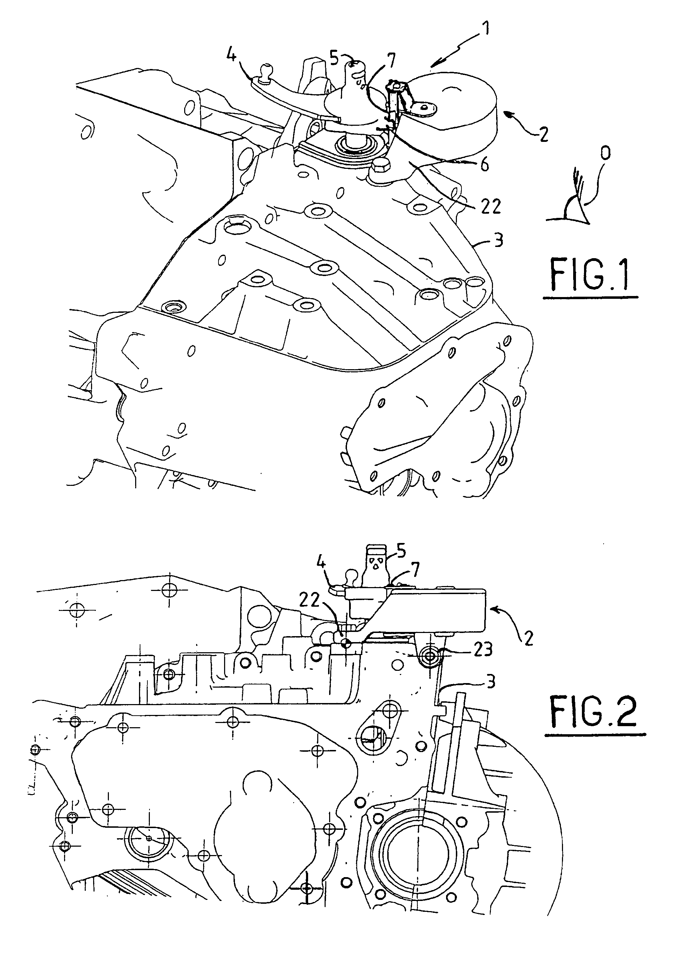

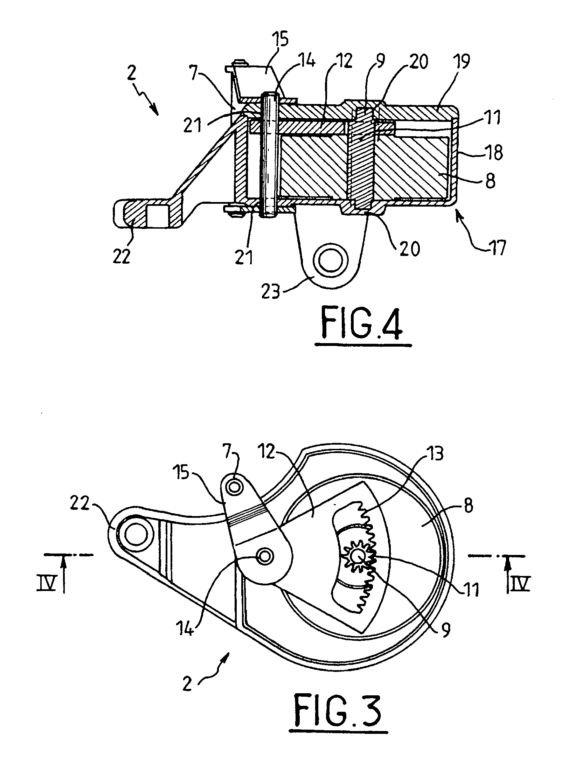

Sur les figures 1 et 2, on distingue un système d'entraînement 1 d'un système inertiel 2 monté sur le carter 3 d'une boîte de vitesses manuelle. On distingue également un levier de passage 4 couplé en rotation à l'arbre de commande interne 5 (le levier de sélection n'est pas représenté) qui est actionné par un câble ou une barre de commande, non représentée, elle-même reliée au levier de vitesses du conducteur de façon à déplacer en rotation l'axe de commande interne 5 pour le passage des vitesses. Le levier de passage 4 actionne en rotation autour de l'arbre de commande 5 une fourche 6, solidaire du levier 4, qui s'étend dans un plan parallèle au plan du levier 4. Cette fourche 6 définit une échancrure en forme générale de U qui s'étend dans un plan perpendiculaire au plan du levier de passage 4 ; l'espace ainsi formé entre les deux branches du U formant rainure de guidage pour une tige d'entraînement 7 durant la commande en sélection de vitesses de l'arbre de commande 5. On a représenté aux figures 3 à 5 le système inertiel 2 comportant une masse inertielle 8 cylindrique et symétrique par rapport à son axe de rotation 9. L'axe 9 est matérialisé par un arbre solidaire de la masse 8 et qui dépasse de part et d'autre de la masse 8.

Une extrémité 10 de l'arbre 9 de la masse 8 est conformée en pignon 11, ou pignon d'inertie, de diamètre inférieur à la masse 8 et qui est adjacent à la face radiale de la masse 8. Le pignon 11 engrène avec une première extrémité d'une branche plane 12 de forme générale en quartier de disque, dans laquelle est ménagée une lumière de forme générale oblongue dont un des bords intérieurs est conformé en secteur denté 13. Dans ce mode de réalisation, le secteur denté 13 est ménagé sur le bord intérieur le plus excentré. Le rapport de démultiplication entre le secteur denté 13 et le pignon d'inertie 11 est déterminé pour permettre une inertie fonctionnelle suffisante même pour une faible valeur de la masse 8.

Cet agencement forme un système de type à crémaillère.

Les extrémités intérieures de la lumière, correspondant aux extrémités du secteur denté 13, définissent des butées de fin de course pour la crémaillère en coopération avec le pignon11.

La deuxième extrémité de la branche 12 est montée fixe sur un axe formant pivot 14 ; l'axe du pivot 14 étant perpendiculaire au plan de la branche 12. Ce même pivot 14 supporte, par ses deux extrémités libres, deux bras parallèles 15 s'étendant tous deux dans des plans perpendiculaires au pivot 14 et parallèles au plan du levier de passage 4. Les extrémités libres de ces deux bras 15 parallèles supportent à leur tour solidairement la tige d'entraînement 7, qui relie ces deux bras 15 et qui est parallèle au pivot 14.

L'ensemble constitué de la tige 7, des deux bras 15, du pivot 14 et de la branche 12 forme un levier d'entraînement pour la masse 8.

La masse inertielle 8, la crémaillère et le levier d'entraînement sont disposés et supportés à l'intérieur d'un boîtier 17.

Le boîtier 17 comporte un corps 18 de forme générale cylindrique et creux fermé par un couvercle 19.

Le boîtier 17 comporte des premiers perçages 20 non débouchant ménagés respectivement dans le fond du corps 18 et le couvercle 19 du boîtier 17 pour recevoir et maintenir en rotation, les extrémités de l'arbre 9 de la masse inertielle 8.

Les premiers perçages 20 sont ménagés à proximité du centre du boîtier 17 et sur un axe médian du boîtier correspondant sensiblement à l'axe de symétrie du boîtier 17.

Le boîtier 17 comporte des deuxièmes perçages débouchant 21 ménagés respectivement dans le fond du corps 18 et le couvercle 19 du boîtier 17 à proximité de l'extérieur du boîtier 17 sur le même axe médian et dans une direction diamétralement opposée par rapport aux premiers perçages 20, pour recevoir et supporter en rotation le pivot 14.

Les bras 15 du levier d'entraînement fixés aux extrémités du pivot 14 et la tige 7 sont disposés à l'extérieur du boîtier 17 pour coopérer avec la fourche 6.

Le boîtier 17 est fixé sur une partie du carter 3 formant sensiblement un dièdre. Il comporte deux pattes de fixation 22 et 23 permettant chacune la fixation du boîtier 17 sur un des plans du dièdre.

Les pattes de fixation 22 et 23 sont venues de matière avec le corps 18 du boîtier 17 qui est obtenu par moulage d'un matériau plastique.

La patte 22 est formée à partir d'une protubérance de la face latérale cylindrique du corps 18 en s'étendant sensiblement selon le plan médian du boîtier et qui se termine en pointe aplatie à son extrémité dans un plan inférieur au plan du fond du corps du boîtier.

La patte 23 est formée à partir d'une protubérance du fond du corps du boîtier s'étendant dans un plan perpendiculaire au fond du boîtier à partir du bord latéral du boîtier ; les plans d'appui des pattes 22 et 23 étant perpendiculaires entre eux.

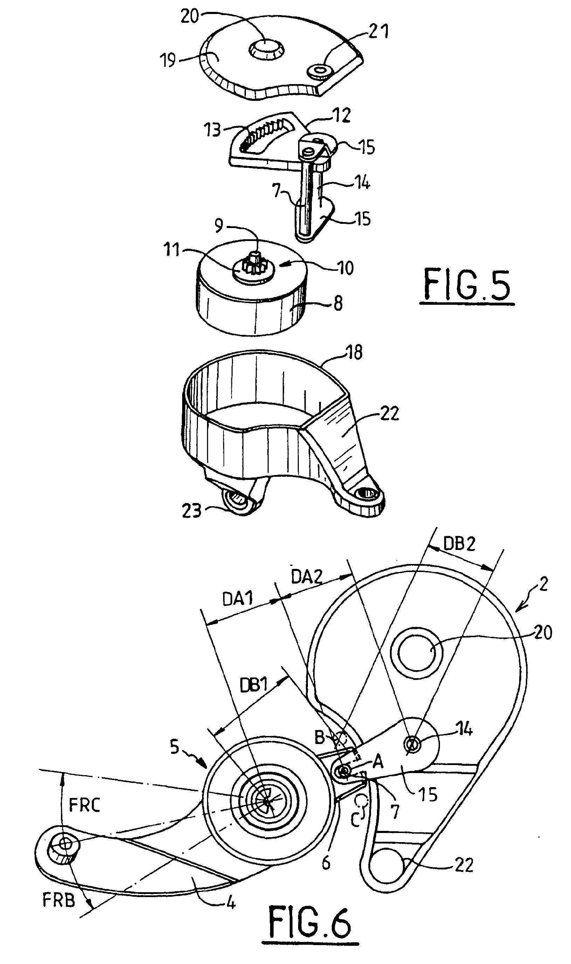

Le fonctionnement du système d'entraînement selon l'invention va maintenant être décrit en s'appuyant principalement sur la figure 6.

La tige 7 est engagée en permanence dans la fourche 6 et coopère avec l'échancrure de la fourche 6 solidaire du levier de passage 4, de manière à ce que la fourche 6 entraîne la crémaillère en rotation, via le pivot 14 maintenu en rotation dans les deuxièmes perçages 21, sous l'action d'une rotation du levier de passage 4.

L'agencement particulier de la fourche 6, solidaire du levier 4, et de la tige d'entraînement 7, solidaire de la crémaillère, permet en outre le déplacement en translation de l'arbre de commande 5 et donc de la fourche 6 le long de la tige d'entraînement 7 ; le déplacement en translation de l'arbre de commande 5 se faisant dans une direction parallèle à l'axe de la tige d'entraînement 7.

La figure 6, illustre un état du système d'entraînement au repos, dans lequel le levier de passage 4 est représenté dans sa position en repos, c'est-à-dire dans une position qui correspond au point mort M : pas de passage ni de sélection de vitesses.

Dans cet état, la tige d'entraînement 7 est engagée dans l'échancrure de la fourche 6 et le système inertiel 2 est au repos tel que représenté à la figure 3. L'axe de symétrie de la branche 12 est centré par rapport à la masse 8.

Le levier de passage 4, la fourche 6 et les bras 15 du levier sont sensiblement alignés.

Sur la figure 6, on a représenté les différents états du système d'entraînement.

Le système d'entraînement est au repos quand la fourche 6 n'est pas entraînée en rotation. Ce qui correspond à la position A de la tige 7 sur la figure.

Le système d'entraînement est activé quand la fourche 6 subit un déplacement en rotation suivant le sens de rotation de la flèche FRB, respectivement FRC, sous l'action de la rotation du levier de passage 4 autour de l'arbre de commande 5. Seul la position de la tige d'entraînement 7 a été représentée en fin de course, respectivement en B pour un déplacement en rotation suivant FRB et en C pour un déplacement en rotation suivant FRC.

Comme expliqué, ci-dessus, le déplacement en translation de la fourche n'a eu aucun effet sur le système inertiel 2, par contre la rotation de la fourche 6, commandée par le déplacement en rotation du levier de passage 4, a eu pour effet de coupler le système inertiel 2 au passage de vitesses.

Le couplage du système d'entraînement est décrit ci-après en détail.

La rotation de la fourche 6 entraîne la rotation du pivot 14 et donc de la branche 12 qui lui est associée, à l'intérieur des deuxième perçages 21 ménagés respectivement dans le fond du corps 8 et dans le couvercle 19 du boîtier 17, par l'intermédiaire de la tige 6 solidaire du pivot 14 et donc de la branche 12.

La branche 12 pivote dans un sens de rotation opposé à celui de la fourche 6 et entraîne en rotation la masse inertielle 8 suivant une démultiplication imposée par le nombre de dents et les diamètres respectifs du secteur denté 13 et du pignon d'inertie 11.

L'agencement particulier qui vient d'être décrit permet donc un "découplage" total entre un mode en translation de l'arbre de commande 5, correspondant à la sélection des vitesses, et un mode en rotation de l'arbre de commande 5 correspondant au passage des vitesses.

Cet agencement met en oeuvre deux types de démultiplication : une première démultiplication dite "primaire" et une deuxième démultiplication dite "secondaire".

On entend par démultiplication primaire la démultiplication définie par le rapport entre l'entraxe axe de l'arbre de commande 5 / axe de la tige d'entraînement 7, DA1, et l'entraxe axe de la tige d'entraînement 7 / axe du pivot 14, DA2, dans la position de repos A ; les deux distances DA1 et DA2 étant choisies égales.

Ce qui signifie que dès le début de l'entraînement de la crémaillère, donc de la masse 8, la démultiplication primaire est égale à 1.

On choisit par ailleurs un entraxe axe de l'arbre de commande 5 / masse 8, inférieur à l'entraxe pivot 14 de la crémaillère / masse 8.

Le débattement de la crémaillère commandé par la rotation du levier de passage 4 autour de l'arbre de commande 5, et de façon symétrique par rapport à l'état de repos A, de l'ordre de +/- 20° dans le mode de réalisation décrit, éloigne l'axe de la tige d'entraînement 7 de l'axe du levier de passage 4 jusqu' à atteindre les positions de fin de course, respectivement B et C. Ce qui a pour effet de modifier la démultiplication primaire pour atteindre une démultiplication, secondaire, différente de la démultiplication primaire.

Au repos (position A), l'axe du pivot 14 et l'axe de la tige d'entraînement 7 sont sensiblement alignés.

Cette évolution de la démultiplication primaire permet d'obtenir un rapport de 1 lors de la mise en inertie de la masse 8 par le levier de passage 4, et d'obtenir un rapport inférieur à 1 lors de la restitution de l'inertie au levier de passage 4. L'énergie inertielle ainsi restituée par la masse 8 au levier de passage 4 bénéficie d'une démultiplication plus favorable au sens du rendement énergétique.

L'introduction d'une démultiplication secondaire à entraxe augmenté permet ainsi de diminuer la masse de la masse inertielle 8 et donc la masse globale du système.

La présente invention n'est bien sûr pas limitée au mode de réalisation décrit. En particulier, toutes les formes de crémaillère et organe d'entraînement conformes à la définition donnée par les revendications rentre dans le cadre de la présente invention.

## Revendications

1. Système d'entraînement d'une masse inertielle (8) couplée à un levier de passage de vitesses (4) coopérant avec une boîte de vitesses manuelle pour le passage de vitesses, comportant une liaison mécanique pour entraîner la masse (8) disposable à l'extérieur du carter (3) de la boîte de vitesse et en rotation autour de son axe de rotation sous l'action de la rotation du levier de passage (4) autour d'un arbre de commande interne (5), la masse (8) étant symétrique par rapport à son axe de rotation, matérialisé par un arbre (9), **caractérisé en ce que** l'arbre est solidaire de la masse (8), ledit arbre (9) étant libre en rotation par rapport au carter de la boîte de vitesses,
la liaison mécanique comporte un moyen formant une fourche (6) solidaire du levier de passage (4), entraînant en rotation une tige (7) solidaire d'une première extrémité d'un levier d'entraînement, la fourche (6) étant en outre apte à coulisser le long de la tige (7).

2. Système d'entraînement selon la revendication 1, **caractérisé en ce que** le levier d'entraînement comporte en outre à sa deuxième extrémité, une crémaillère montée pivotante autour d'un axe de pivot (14, 21).

3. Système d'entraînement selon la revendication 2, **caractérisé en ce que** la crémaillère comporte un secteur denté (13) engrenant avec un pignon (11) coaxial à l'arbre (9) et solidaire de la masse (8).

4. Système d'entraînement selon la revendication 3, **caractérisé en ce que** le pignon (11) est adjacent à une face radiale la masse (8).

5. Système d'entraînement selon l'une quelconque des revendications 1 à 4, **caractérisé en ce que** l'entraxe (DA1, DA2 ; DB1, DB2) axe arbre de commande (5) / axe tige d'entraînement (7) est variable entre deux positions extrêmes (B, C) imposées par le débattement du levier de passage (4) définissant une démultiplication évolutive.

6. Système inertiel couplé à un levier de passage de vitesses (4) d'une boîte de vitesses manuelle et entraîné par un système d'entraînement selon la revendication 2 et l'une quelconque des revendications 1, 3, 4 ou 5, **caractérisé en ce que** la masse inertielle (8) et la crémaillère sont disposés et supportés à l'intérieur d'un boîtier (17) et **en ce que** le levier d'entraînement est disposé et supporté sur le boîtier (17).

7. Système inertiel selon la revendication 6, **caractérisé en ce que** le boîtier (17) est de forme générale cylindrique creuse.

8. Système inertiel selon la revendication 7, **caractérisé en ce que** le boîtier (17) comporte des premiers perçages (20) pour recevoir et maintenir en rotation, les extrémités de l'arbre (9) de la masse inertielle (8).

9. Système inertiel selon la revendication 8, **caractérisé en ce que** les premiers perçages (20) sont ménagés à proximité du centre du boîtier (17) et sur un axe médian du boîtier (17).

10. Système inertiel selon l'une quelconque des revendications 8 et 9, **caractérisé en ce que** le boîtier (17) comporte des deuxièmes perçages (21) ménagés à proximité de l'extérieur du boîtier (17), sur le même axe médian et dans une direction diamétralement opposée par rapport aux premiers perçages (20), pour recevoir et supporter en rotation le pivot (14) du levier d'entraînement.

11. Système inertiel selon la revendication 10, **caractérisé en ce que** le pivot (14) supporte la crémaillère à l'intérieur du boîtier (17), et **en ce que** les bras (15) du levier, supportés par les extrémités libres du pivot (14), sont disposés à l'extérieur du boîtier (17), les extrémités libres des bras supportant la tige d'entraînement (7).

12. Système inertiel selon l'une quelconque des revendications 6 à 11, **caractérisé en ce que** le boîtier (17) est fixable sur une partie de la boîte de vitesses formant un dièdre ; le boîtier (17) comportant au moins deux pattes de fixation (22, 23) permettant chacune la fixation du boîtier (17) sur chaque plan du dièdre.

13. Système inertiel selon la revendication 12, **caractérisé en ce que** les pattes de fixation (22, 23) du boîtier (17) viennent de matière avec le boîtier (17).

## Claims

1. System for driving an inertial mass (8) coupled with a gear shifting lever (4) cooperating with a manual gearbox for shifting gears, comprising a mechanical connection for driving the mass (8) disposable outside the casing (3) of the gearbox and in rotation about its rotational axis by an action of the rotation of the gear shifting lever (4) around an inner control shaft (5), the mass (8) being symmetrical with respect to its rotational axis formed by a shaft (9), **characterized in that** the shaft is affixed to the mass (8), said shaft (9) being free in rotation with respect to the casing of the gearbox, the mechanical connection comprises a means forming a fork (6) affixed to the gear shifting lever (4), driving in rotation a rod (7) affixed to a first end of the gear shifting lever, the fork (6) being further adapted to slide along the rod (7).

2. Driving system according to claim 1, **characterized in that** the driving lever further comprises at its second end, a gear rack, pivotally mounted about a pivot axis (14, 21).

3. Driving system according to claim 2, **characterized in that** the gear rack comprises a toothed sector (13) meshing with a pinion (11) that is coaxial to the shaft (9) and affixed to the mass (8).

4. Driving system according to claim 3, **characterized in that** the pinion (11) is adjacent to a radial surface of the mass (8).

5. Driving system according to any of claims 1 to 4, **characterized in that** the distance between axes (DA1, DA2; DB1, DB2) of the control shaft (5) / driving rod (7) can vary between two extreme positions (B, C) imposed by the clearance of the shifting lever (4) defining a progressive gear reduction.

6. Inertial system coupled with a gear shifting lever (4) of a manual gearbox and driven by a driving system according to claim 2 and any of claims 1, 3, 4, or 5, **characterized in that** the inertial mass (8) and the gear rack are arranged and supported inside a box (17) and **in that** the driving lever is arranged and supported on the box (17).

7. Inertial system according to claim 6, **characterized in that** the box (17) has a general hollow, cylindrical shape.

8. Inertial system according to claim 7, **characterized in that** the box (17) comprises first borings (20) to receive and maintain in rotation the ends of the shaft (9) of the inertial mass (8).

9. Inertial system according to claim 8, **characterized in that** the first borings (20) are housed in the vicinity of the center of the box (17) and on a median axis of the box (17).

10. Inertial system according to any of claims 8 and 9, **characterized in that** the box (17) comprises second borings (21) housed in the vicinity of the outside of the box (17), on the same median axis and in a direction, diametrically opposed to the first borings (20), to receive and support in rotation the pivot (14) of the driving lever.

11. Inertial system according to claim 10, **characterized in that** the pivot (14) supports the gear rack inside the box (17), and **in that** the arms (15) of the lever, supported by the free ends of the pivot (14) are arranged outside the box (17), the free ends of the arms supporting the driving rod (7).

12. Inertial system according to any of claims 6 to 11, **characterized in that** the box (17) can be fixed onto a portion of the gearbox forming a dihedron; the box (17) comprising at least two fastening lugs (22, 23) each enabling the fastening of the box (17) on each plane of the dihedron.

13. Inertial system according to claim 12, **characterized in** the fastening lugs (22, 23) of the box (17) are molded with the box (17).

## Patentansprüche

1. Antriebssystem einer Trägheitsmasse (8), die an einen Gangschalthebel (4) gekoppelt ist, der mit einem Handschaltgetriebe zum Einlegen von Gängen zusammenwirkt, umfassend eine mechanische Verbindung zum Antreiben der Masse (8), die außerhalb des Gehäuses (3) des Schaltgetriebes, und durch die Rotationswirkung des Schalthebels (4) um eine interne Steuerwelle (5) um ihre eigene Rotationsachse drehend angeordnet werden kann, wobei die Masse (8) im Verhältnis zu ihrer Rotationsachse, die durch eine Welle (9) vergegenständlicht wird, symmetrisch ist, **dadurch gekennzeichnet, dass** die Welle fest mit der Masse (8) verbunden ist, wobei sich die besagte Welle (9) im Verhältnis zum Gehäuse des Schaltgetriebes frei dreht,
die mechanische Verbindung umfasst dabei ein Mittel in Form einer Gabel (6), die fest mit dem Schalthebel (4) verbunden ist, und einen Schaft (7) zum Drehen bringt, der fest mit einem ersten Ende eines Antriebshebels verbunden ist, wobei die Gabel (6) ferner dazu geeignet ist, am Schaft (7) entlang zu gleiten.

2. Antriebssystem nach Anspruch 1, **dadurch gekennzeichnet, dass** der Antriebshebel ferner an seinem zweiten Ende eine Zahnstange umfasst, die um eine Schwenkachse (14, 21) herum schwenkbar gelagert ist.

3. Antriebssystem nach Anspruch 2, **dadurch gekennzeichnet, dass** die Zahnstange einen verzahnten Abschnitt (13) umfasst, der in ein Ritzel (11) eingreift, das koaxial zur Welle (9) ausgeführt, und fest mit der Masse (8) verbunden ist.

4. Antriebssystem nach Anspruch 3, **dadurch gekennzeichnet, dass** das Ritzel (11) an eine radiale Seite der Masse (8) angrenzt.

5. Antriebssystem nach irgendeinem der Ansprüche 1 bis 4, **dadurch gekennzeichnet, dass** der Achsabstand (DA1, DA2; DB1, DB2) zwischen der Steuerwelle (5) und dem Antriebsschaft (7) zwischen zwei Endpositionen (B, C) variabel ist, die durch den Federweg des Schalthebels (4) vorgegeben sind, der ein jeweils unterschiedliches Übersetzungsverhältnis definiert.

6. Trägheitssystem, das mit einem Gangschalthebel (4) eines Handschaltgetriebes gekoppelt ist, und durch ein Antriebssystem nach Anspruch 2 und irgendeinem der Ansprüche 1, 3, 4 oder 5 angetrieben wird, **dadurch gekennzeichnet, dass** die Trägheitsmasse (8) und die Zahnstange in einem Gehäuse (17) angeordnet sind und gehalten werden, und dadurch, dass der Antriebshebel auf dem Gehäuse (17) angeordnet ist und gehalten wird.

7. Trägheitssystem nach Anspruch 6, **dadurch gekennzeichnet, dass** das Gehäuse (17) im Allgemeinen eine hohlzylindrische Form aufweist.

8. Trägheitssystem nach Anspruch 7, **dadurch gekennzeichnet, dass** das Gehäuse (17) erste Bohrungen (20) umfasst, um die Enden der Welle (9) der Trägheitsmasse (8) aufzunehmen und in Rotation zu halten.

9. Trägheitssystem nach Anspruch 8, **dadurch gekennzeichnet, dass** die ersten Bohrungen (20) in der Nähe der Mitte des Gehäuses (17) und auf einer Mittenachse des Gehäuses (17) angeordnet sind.

10. Trägheitssystem nach irgendeinem der Ansprüche 8 und 9, **dadurch gekennzeichnet, dass** das Gehäuse (17) zweite Bohrungen (21) umfasst, die in der Nähe der Außenseite des Gehäuses (17) angeordnet sind, auf derselben Mittenachse und in einer im Verhältnis zu den ersten Bohrungen (20) völlig entgegengesetzten Richtung, um den Drehzapfen (14) des Antriebshebels aufzunehmen und in Rotation zu halten.

11. Trägheitssystem nach Anspruch 10, **dadurch gekennzeichnet, dass** der Drehzapfen (14) die Zahnstange im Innern des Gehäuses (17) hält, und dadurch, dass die Arme (15) des Hebels, die von den freien Enden des Drehzapfens (14) gehalten werden, außerhalb des Gehäuses (17) angeordnet sind, wobei die freien Enden der Arme den Antriebsschaft (7) halten.

12. Trägheitssystem nach irgendeinem der Ansprüche 6 bis 11, **dadurch gekennzeichnet, dass** das Gehäuse (17) auf einem Teil des Schaltgetriebes befestigt werden kann, das einen Dieder bildet; wobei das Gehäuse (17) mindestens zwei Befestigungslaschen (22, 23) umfasst, die jeweils die Befestigung des Gehäuses (17) auf jeder Ebene des Dieders ermöglichen.

13. Trägheitssystem nach Anspruch 12, **dadurch gekennzeichnet, dass** die Befestigungslaschen (22, 23) des Gehäuses (17) in einem Stück mit dem Gehäuse (17) gefertigt sind.
